# EUROPEAN PATENT SPECIFICATION

(11) **EP 2 007 047 B1**
(45) Date of publication and mention of the grant of the patent: **03.05.2017**
(21) Application number: 07740097.6
(22) Date of filing: 28.03.2007
(51) Int. Cl.: H04B 3/54

(54) **COMMUNICATION DEVICE ENABLING TEMPORAL COEXISTENCE BETWEEN SYSTEMS**
DIE ZEITLICHE KOEXISTENZ ZWISCHEN SYSTEMEN ERMÖGLICHENDE KOMMUNIKATIONSEINRICHTUNG
DISPOSITIF DE COMMUNICATION PERMETTANT À DES SYSTÈMES DE COEXISTER DANS LE TEMPS

(30) Priority: 03.04.2006 JP 2006102272
(43) Date of publication of application: 24.12.2008
(73) Proprietor: Panasonic Intellectual Property Management Co., Ltd., Osaka-shi, Osaka 540-6207 (JP)
(72) Inventor: FUJIWARA, Yuki, 2-1-61, Shiromi, Chuo-ku, Osaka 540-6207 (JP); KURODA, Go, 2-1-61 Shiromi. Chuo-ku, Osaka 540-6207 (JP); IKEDA, Koji, 2-1-61, Shiromi, Chuo-ku, Osaka 540-6207 (JP); KUROBE, Akio, 2-1-61, Shiromi, Chuo-ku, Osaka 540-6207 (JP)
(74) Representative: Dr. Gassner & Partner mbB
(86) International application number: PCT/JP2007/056659
(87) International publication number: WO 2007/114169

(56) References cited:
- WO-A2-2004/015907
- FR-A1- 2 469 055
- JP-A- 2004 040 646
- JP-A- 2005 073 240
- JP-A- 2007 019 618
- "HomePlug AV White Paper" INTERNET CITATION 31 December 2005 (2005-12-31), XP003018236 Retrieved from the Internet: URL:http://www.homeplug.org/products/white papers/HPAV-White-Paper_050818.pd> [retrieved on 2007-01-01]

## Description

### TECHNICAL FIELD

The present invention relates to a mechanism which allows a plurality of communication systems of different communication schemes to coexist on a same communication medium. The present invention particularly relates to a technique for enabling coexistence of a power line communication modem, which guarantees QoS (Quality of Service) required by a communication service, and a power line communication modem which performs best-effort communication, and to a communication device included in each communication system.

### BACKGROUND ART

There exists a PLC (Power Line Communication) technology, which is one of the communication methods for connecting an in-home PC (Personal Computer) to a network device such as a broadband router or the like so as to allow the in-home PC to access the Internet. Since an existing power line is used as a communication medium in this power line communication technology, new wiring work is unnecessary, and a high-speed communication is realized by only inserting a power plug into any power socket at home. For this reason, research and development, and demonstration experiments of the power line communication technology have been actively carried out all over the world. In Europe and the United States, this technology has already been commercialized in a number of forms.

For example, there is the HomePlug Ver.1.0 specification created by the HomePlug Powerline Alliance in the United States (see Non-Patent Document 1). This specification is assumed to be mainly applied to the Internet, mailing and file transfer performed by personal computers. This specification adopts the CSMA/CA technique for media access control for controlling which power line communication modem is to have an access to a power line. Therefore, this specification only realizes best-effort communication which does not guarantee a band to be used. An other example of prior art can be found in "HomePlug AV White paper".

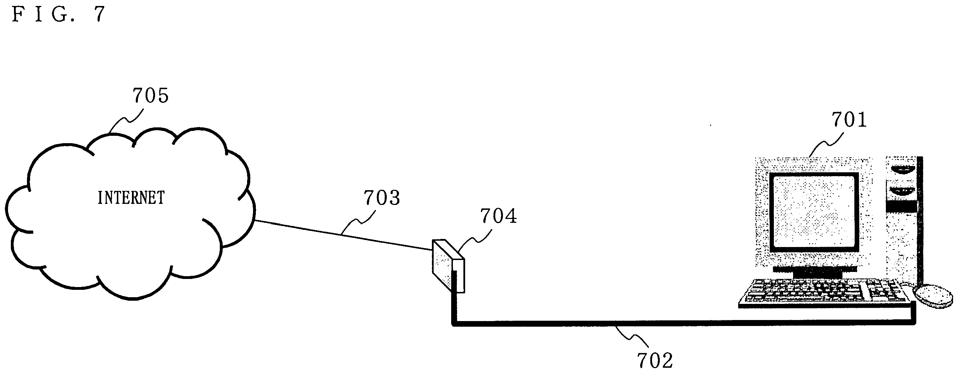

FIG. 7 shows a general configuration for accessing the Internet by using an in-home PC. A PC 701 used by a user is connected via an Ethernet (registered trademark) 702 to an Internet access router 704, and further connected to the Internet 705 via an access line 703. In general, ADSL (Asymmetric Digital Subscriber Line), FTTH (Fiber To The Home) or the like is used for the access line 703. Here, there is often a case where a place at which the access line 703 is drawn into home is different from a room where the personal computer 701 is placed. In this case, there occurs a problem that it is necessary to extend a cable of the Ethernet (registered trademark) 702 from the Internet router 704 to the PC 701.

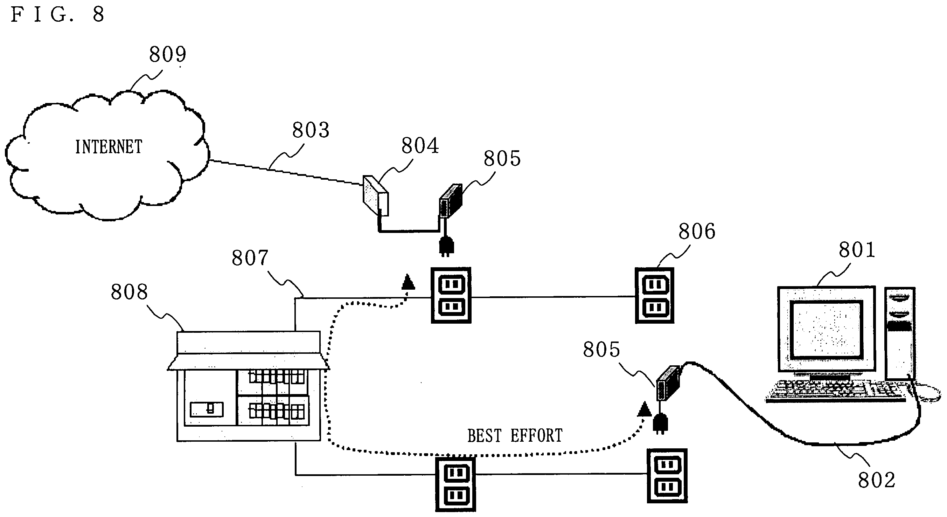

In the field of power line communication, in order to reduce such an extension, a conversion adaptor to be used between a power line and the Ethernet (registered trademark) has been commercialized (hereinafter, referred to as a P/E conversion adaptor). FIG. 8 shows a general configuration for accessing the Internet by using P/E conversion adaptors.

In FIG. 8, two P/E conversion adaptors 805 are respectively connected to power sockets in a room in which a personal computer 801 and an Internet access router 804 are placed. Here, best-effort communication is realized by performing power line communication via an in-home power line 807 and a panel board 808. As shown herein, by using the power line communication, the necessity of wiring work is eliminated, and high-speed communication is realized only by inserting a power plug into any power socket at home.

On the other hand, there is a move to construct a new system which is configured with home Internet appliances and in which the Internet technology led by PCs is applied to AV apparatuses or communication apparatuses. This move is now beginning to develop a new system where network functions are added to AV apparatuses or communication apparatuses to establish coordination between an AV server (e.g., DVD recorder or HDD recorder) and a TV which are respectively placed in different rooms, and to merge an IP phone or IP camera, to which the Internet technology is applied, to a TV or PC.

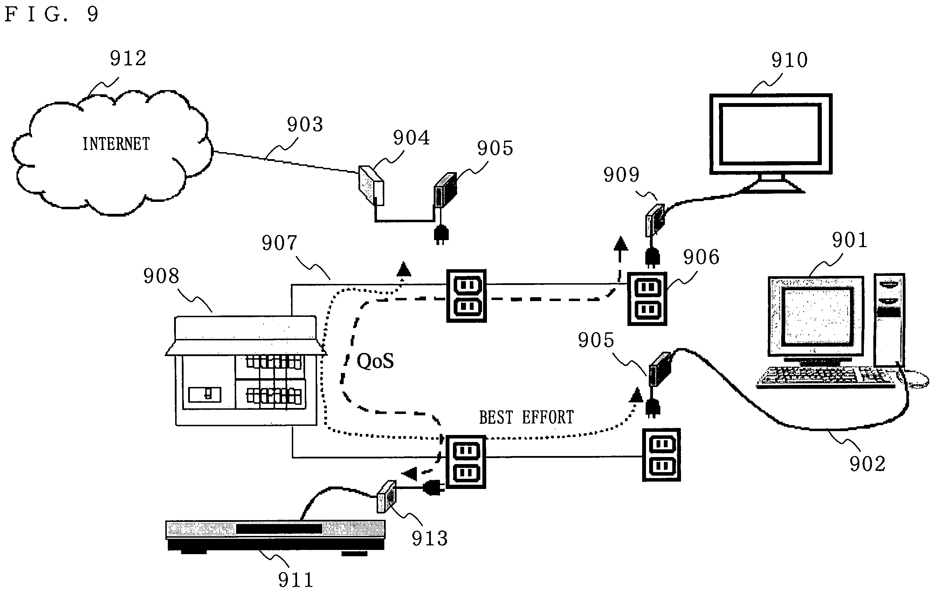

FIG. 9 shows a specific example of the aforementioned new system. Unlike the conventional Internet, mailing or file transfer, it is necessary for AV streaming or audio communication to guarantee real-time communication. In particular, for telephone or the like which performs interactive audio communication in real time, prevention of delay in communication is very strictly required. In general, the delay is limited to approximately 10msec. For services which require such QoS guarantee, there is a problem that best-effort communication does not satisfy required quality.

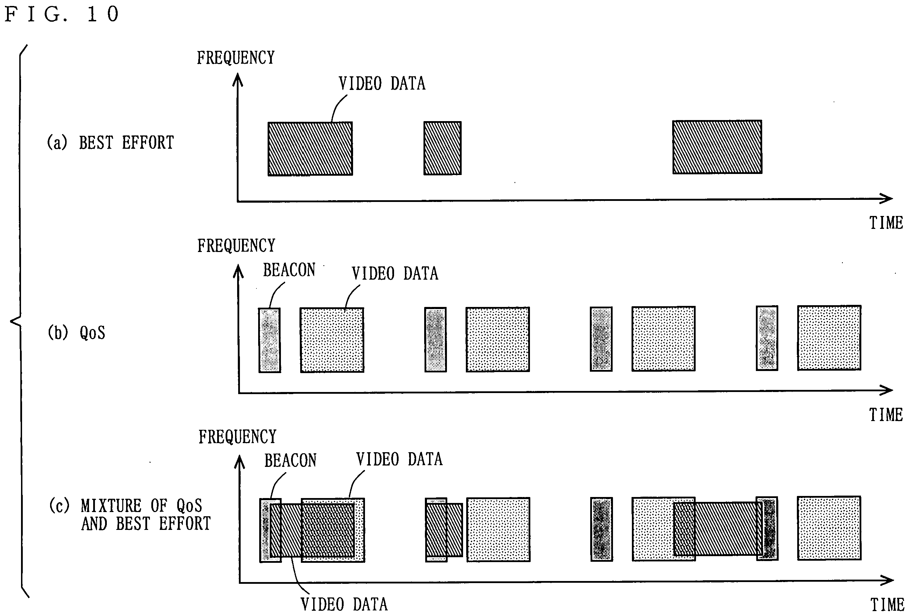

Accordingly, there is a proposed power line communication method for guaranteeing QoS (see Non-Patent Document 2). FIG. 10 shows best-effort power line communication (hereinafter, referred to as best-effort type power line communication) and power line communication which requires QoS guarantee (hereinafter, referred to as QoS type power line communication). In FIG. 10, the vertical axis represents frequency, and the horizontal axis represents time.

In the case of HomePlug Over.1.0 which is one of the best-effort type power line communications, a frequency to be used is in a range of approximately 2MHz to 21MHz. The temporal axis shows that a time to be used varies depending on a data generation timing or data amount. Even if there is a delay in arrival of data for displaying a home page on the Internet or obtaining an email, such services can be provided as long as the delay is within a tolerable range.

On the other hand, most of the QoS type power line communications aim at high-speed transmission of video data, and use a wider frequency band. Further, in order to guarantee QoS, there is one QoS controller present in a system. This QoS controller transmits a beacon at regular intervals, thereby controlling a transmission timing and the amount of transmission data for power line modems ((b) of FIG. 10). Only one of the power line modems is required to include therein a function of the QoS controller. In the example of FIG. 9, a P/E conversion adaptor 909 includes the function therein.

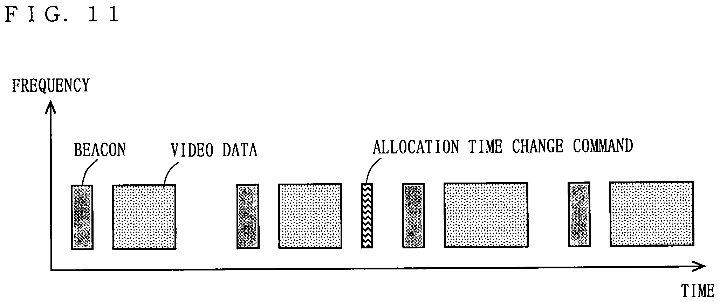

When it is assumed that the amount of video data and a communication speed are fixed, data for a fixed period of time is transmitted to a power line at regular intervals ((b) of FIG. 10). If this data does not arrive by a predetermined time, distortion occurs in the video, and therefore a service cannot be provided. Further, an apparatus connected to the power line and an operation status thereof change as time passes. For this reason, a communication status is, in fact, not fixed but changes all the time. When a communication speed decreases, a time required to communicate a same amount of data changes. Therefore, when detecting a decrease in the speed, a power line modem which communicates video data notifies, by a communication command, the QoS controller of the decrease in the speed, and receives an allocation of a necessary time for communicating the same amount of data. In this manner, QoS can be guaranteed. This is illustrated in FIG. 11. In FIG. 11, when detecting a decrease in the communication speed, the power line modem transmits an allocation time change command to the QoS controller, and thereby changes a time for communicating data to be longer thereafter. In this manner, communication of the same amount of data per unit time can be maintained.

As described above, various schemes of power line communication technology have been developed. Power lines wired at home are all connected at a panel board. For this reason, when power line modems of different schemes are used in a same home, a power line modem of one scheme regards a signal, which is transmitted from a power line modem of another scheme to a power line, only as a noise. Accordingly, when these modems perform communications at the same time, the communications interfere with each other or the communications both become unable to be performed as shown in (c) of FIG. 10, and as a result, the communication speed decreases significantly.

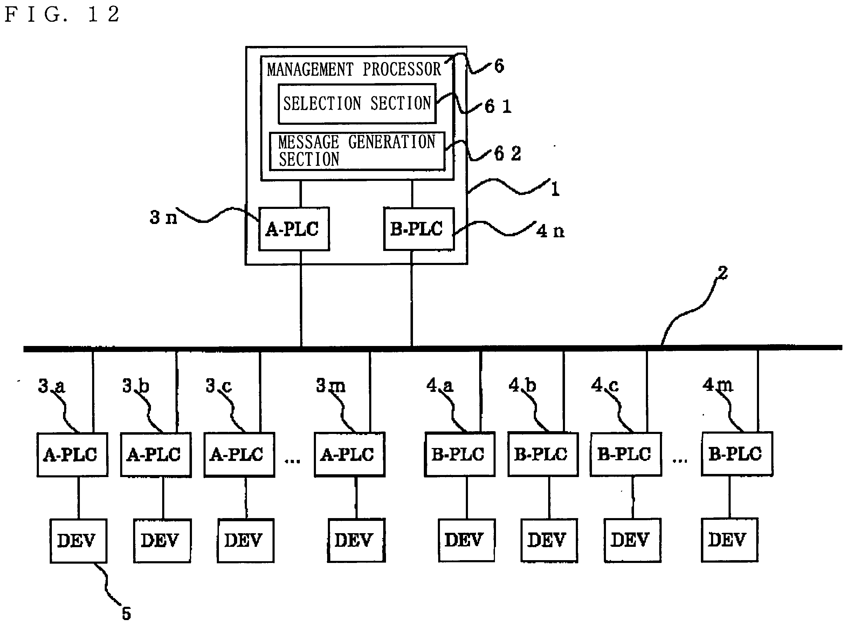

In order to improve this problem, for example, Patent Document 1 proposes a method for, in the case where a plurality of power line modems of different data communication schemes are present on a same communication line, controlling data transmission of each power line modem. FIG. 12 illustrates this conventional technique.

In FIG. 12, a selection section 61 within a management processor 6 selects, for example, power line modems 4a to 4m of Scheme B as transmission-permitted power line modems, and a message generation section 62 generates a transmission permission message for providing a transmission permission to the power line modems 4a to 4m of Scheme B, and generates a transmission prohibition message for providing a transmission prohibition to power line modems 3a to 3m of Scheme A. A power line modem 3n of Scheme A transmits the transmission prohibition message to the power line modems 3a to 3m of Scheme A, and a power line modem 4n of Scheme B transmits the transmission permission message to the power line modems 4a to 4m of Scheme B.
[Patent Document 1] Japanese Laid-Open Patent Publication No. 2002-368831
[Non-Patent Document 1] Yu-Ju Lin et al., "A Comparative Performance Study of Wireless and Power Line Networks", IEEE Communication Magazine, April 2003, p54-p63.
[Non-Patent Document 2] Shinichiro Ohmi, "A Media Access Control Method for High-Speed Power Line Communication System Modems", IEEE CCNC 2004.

### DISCLOSURE OF THE INVENTION

### PROBLEMS TO BE SOLVED BY THE INVENTION

However, in the above-described conventional technique, all the existing communication schemes have to be mounted on a coexistence control terminal, and there is a problem that an apparatus cost increases in the case where there are three or more existing communication schemes. Further, in the case where a new communication scheme appears in the future, there is a necessity to develop a coexistence control terminal in which the communication scheme is newly mounted. Thus, there is a problem that it is highly difficult to maintain a coexistence status.

In order to solve this problem, there is a conceivable technique in which all the power line communication systems are provided with a simple and easily mountable coexistence control signal transmission/reception section, and coexistence of a plurality of different communication schemes is realized by performing time-division multiplexing (TDM) on a communication band by using a coexisting control signal.

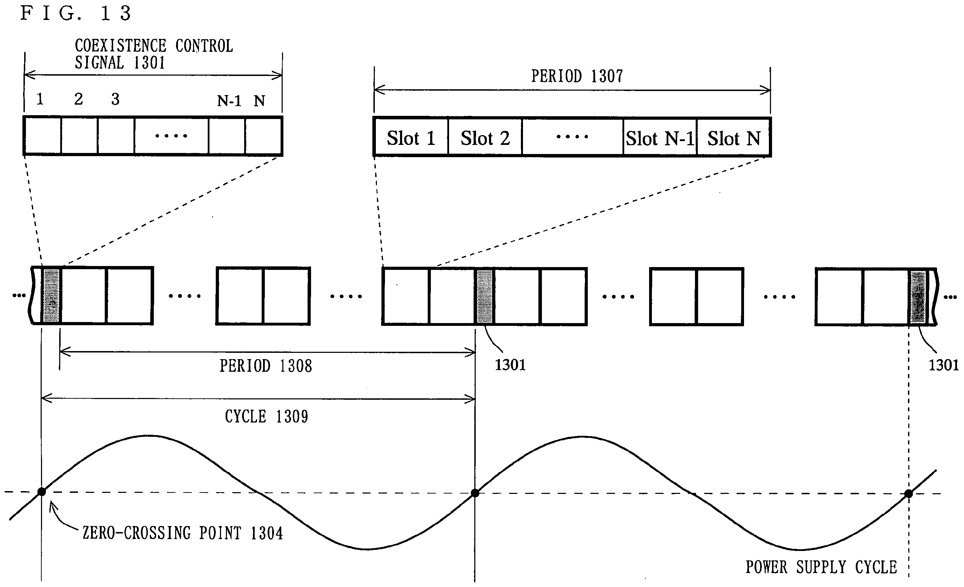

For example, as shown in FIG. 13, a period, during which a coexistence control signal 1301 is exchanged at a predetermined timing, is repeated with a cycle 1309, and a communication band is defined such that a period 1308 is divided by periods 1307 each of which has N segments (communication slots) as one unit. Then, by using the coexistence control signal 1301 which is transmitted/received with the cycle 1309, a usage right of the N communication slots is individually allocated to any of the power line communication systems, whereby coexistence among the communication systems can be realized.

In order to realize sharing of a medium by the communication systems with low loss, it is desired that an occupancy rate of the medium can be set in detail. However, in the communication systems shown in FIG. 13 based on the conventional technique, the communication slots fixed for each period 1307 are allocated to each communication system. Therefore, the medium occupancy rate of each communication system can be set only in units of 1/N.

A conceivable manner, which allows the medium occupancy rate to be set in detail, is to increase the number of communication slots which divide the period 1307 (i.e., increase the variable N). However, a header portion of a transmission frame is necessary for each communication slot, and there is a problem that overhead of header portions increases in accordance with an increase in the number of communication slots, whereby a transmission efficiency is decreased. For example, in the case of performing communication by a general PLC system of 10Mbps or higher, a length of each communication slot is desired to be 3msec or longer.

Another conceivable manner, which allows the medium occupancy rate to be set in detail, is to prolong the period 1307 while leaving the length of each communication slot (this is equivalent to increasing the variable N). In this manner, however, a TDM cycle is prolonged, which still causes a problem that it is difficult to apply this manner to such a service as VoIP (Voice over IP) which requires latency. To be specific, the TDM cycle is required to be 20 to 30msec, and even a shortest communication slot length can only be set such that N approximately equals to 10.

Thus, it is difficult only with the above-described simple conventional configuration to satisfy QoS requirements and set the medium occupancy rate in detail.

Therefore, an object of the present invention is to provide a communication device which allows: a plurality communication systems of different communication schemes to coexist on a same communication medium; a simple configuration to satisfy QoS requirements; and an occupancy rate of the medium to be set in detail.

### SOLUTION TO THE PROBLEMS

The present invention is directed to a communication device to be used in each of a plurality of communication systems that coexist on a same communication medium by time division communication, and also directed to a communication device which coexists with another communication device on a same communication medium by time division communication. In order to achieve the above object, each communication device of the present invention comprises: a coexistence control section for allocating a communication slot, in units of 1/X for a first communication slot and in units of 1 for a second communication slot, such that the communication slot is to be exclusively used by a communication system to which the communication device belongs, or that the communication slot is to be exclusively used by the communication device; and a coexistence signal transmission section for transmitting, to another of the communication systems or to said another communication device, a coexistence signal indicating the communication slot that has been allocated by the coexistence control section and which the communication system or the communication device is to exclusively use.

In the present invention, a cycle T is divided, using communication slot units each comprising N communication slots (N is an integer no less than 2), into M periods (M is an integer no less than 2), and at least one of the communication slots in each communication slot unit is defined as the first communication slot thereby enabling acquisition of a right for performing communication M/X times (X is a divisor of M) in the cycle T, and in each communication slot unit, a communication slot other than the first communication slot is defined as the second communication slot thereby enabling acquisition of a right for performing communication M times in the cycle T.

Preferably, the coexistence signal comprises X segments corresponding to the units of 1/X of the first communication slot and N segments corresponding to the units of 1 of the second communication slot, and exclusive use of the communication slot allocated by the coexistence control section is declared by storing predetermined information in a segment among the multiple segments of the coexistence signal, the segment corresponding to the communication slot which is desired to be exclusively used.

Typically, the number of first communication slots is set to 1, and the number of second communication slots is set to N-1.

Further, in the case where the communication medium is a power line, it is desired that a reference for a start of the cycle T is set to a zero-crossing point of an alternating current flowing on the power line.

### EFFECT OF THE INVENTION

The above present invention enables: a plurality of communication systems of different communication schemes to coexist on a same communication medium; a simple configuration to satisfy QoS requirements; and an occupancy rate of the medium to be set in detail.

### BRIEF DESCRIPTION OF THE DRAWINGS

[FIG. 1] FIG. 1 shows an example of a power line communication system comprising communication devices according to an embodiment of the present invention.
[FIG. 2] FIG. 2 shows an example of a coexistence signal 201 and communication slots defined for the communication devices according to the embodiment of the present invention.
[FIG. 3] FIG. 3 shows an occupancy rate, in a case based on the definition shown in FIG. 2, of a medium in relation to the number of communication slots secured by a communication system.
[FIG. 4] FIG. 4 shows in detail an exemplary configuration of master stations 111 and 121.
[FIG. 5] FIG. 5 is a flowchart showing operations of the master stations 111 and 121 in a steady state.
[FIG. 6] FIG. 6 shows an example of another power line communication system comprising communication devices according to the embodiment of the present invention.
[FIG. 7] FIG. 7 shows an example of a conventional system configuration in the case where an in-home PC accesses the Internet by using the Ethernet (registered trademark).
[FIG. 8] FIG. 8 shows an example of a conventional system configuration in the case where an in-home PC accesses the Internet by using power line communication.
[FIG. 9] FIG. 9 shows an exemplary system configuration in which a PC for performing Internet access and an AV server for TV image viewing coexist on a power line medium.
[FIG. 10] FIG. 10 shows examples of a data stream transmitted on a communication medium.
[FIG. 11] FIG. 11 shows an example of a QoS data stream transmitted on a communication medium.
[FIG. 12] FIG. 12 shows an exemplary configuration of a conventional communication system which allows a plurality of power line modems to coexist.
[FIG. 13] FIG. 13 shows an example of a coexistence control signal 1301 and communication slots defined for a conventional communication device.

### DESCRIPTION OF THE REFERENCE CHARACTERS

- 110, 120, 610: communication system
- 111, 121: master station (controller)
- 112, 122, 123: slave station
- 113, 114, 124 to 126, 616 to 620: electronic device
- 130, 630: power line
- 140, 640: panel board
- 201: coexistence signal
- 204: zero-crossing point
- 207: communication slot unit
- 208: D-Slot basic cycle
- 209: coexistence signal cycle T
- 402: power line communication modem
- 403: coexistence control section
- 404: zero-crossing point detection section
- 405: coexistence signal cycle timer
- 406: coexistence signal transmission section
- 407: coexistence signal receiving section
- 408: communication slot cycle timer
- 409: S-Slot counter
- 410: D-Slot counter
- 611 to 615: communication device

### BEST MODE FOR CARRYING OUT THE INVENTION

Hereinafter, an embodiment of the present invention will be described by taking, as an example, a case where the present invention is applied to a power line communication system using a power line as a communication medium. Note that, the communication medium may be wireless, or a wired communication medium other than a power line.

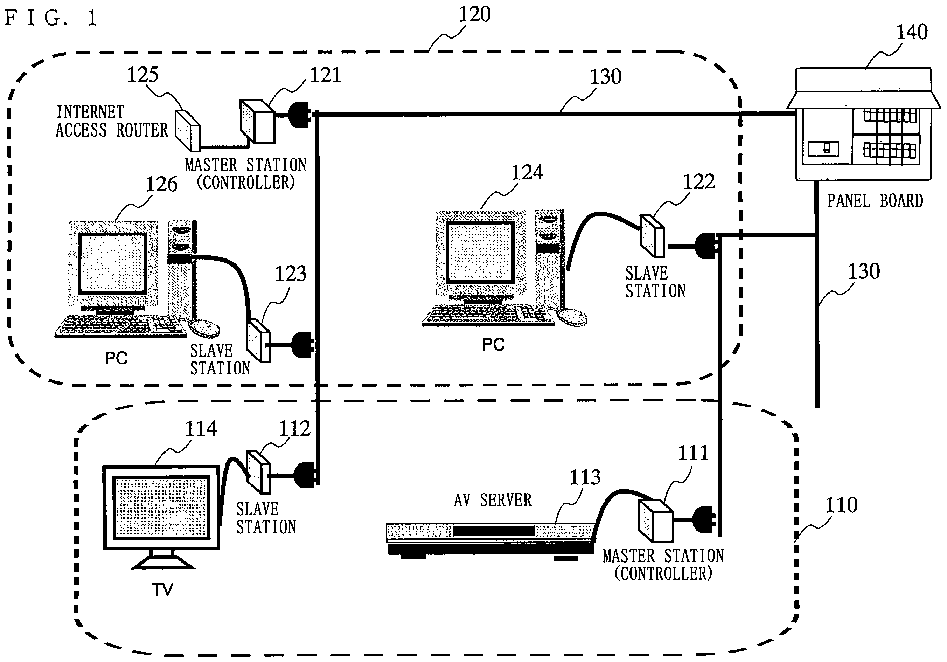

FIG. 1 shows an example of a power line communication system comprising communication devices according to the embodiment of the present invention. In FIG. 1, a communication system 110 and a communication system 120 are defined. The communication system 110 is a communication system which uses power lines 130 wired at home and which comprises: a communication device 111 (hereinafter, referred to as a master station) for controlling coexistence with another power line communication system 120; and another communication device 112 (hereinafter, referred to as a slave station). The slave station 112 is a device which operates under control of the master station 111 in relation to coexistence control with the power line communication system 120. The communication system 110 has one or more slave stations 112 present therein. The communication system 120 uses a different data communication scheme from that of the communication system 110, and uses the power lines 130 wired at home. Similarly to the communication system 110, the communication system 120 comprises one master station 121 and other slave stations 122 and 123. These master stations and slave stations are connected to various electronic devices.

Described below is a method which enables, using TDM, the communication systems 110 and 120 of different data communication schemes to coexist in the power line communication system shown in FIG. 1 without interfering with each other's communication, whichmethod allows band allocation (occupancy rate of the medium) to be set in detail.

Although described below in the embodiment is a communication system which only uses TDM to perform allocation of communication bands, TDM processing therein can be similarly applied to a communication system which uses TDM and FDM (Frequency Division Multiplexing) in a two-dimensional manner to perform allocation of communication bands.

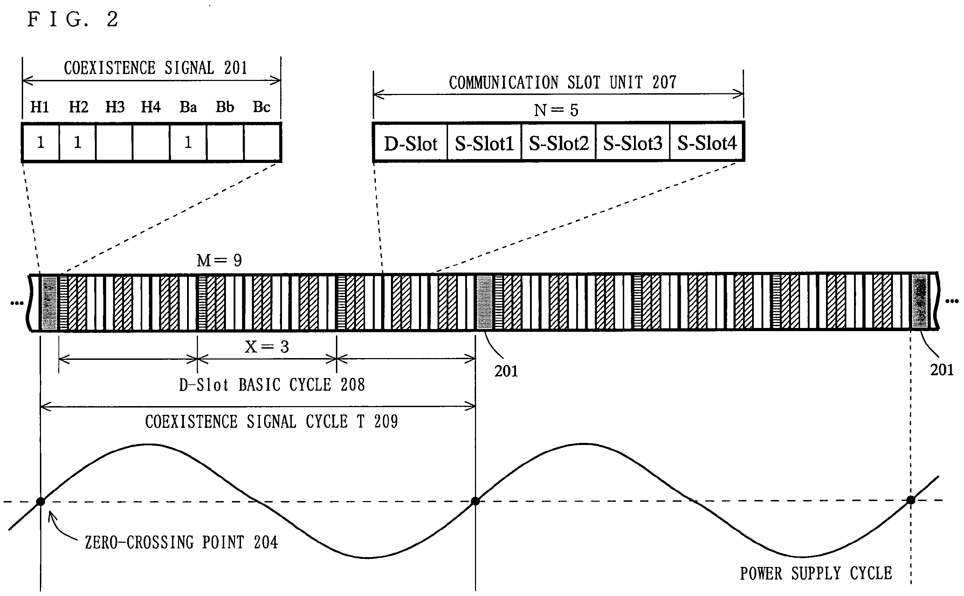

FIG. 2 shows an example of a coexistence signal 201 to be transmitted by the master stations 111 and 121 of the communication systems 110 and 120. It is crucial that a necessary configuration for controlling the coexistence signal 201 can be implemented with a low cost. At the same time, however, a high communication precision is required on a power line on which conditions for communication are severe.

Therefore, described below is an exemplary case in which the present invention uses a method for, by using a zero-crossing point of a power supply cycle as a reference, causing coexistence signals, which are transmitted/received between the communication systems, to precisely synchronize with each other. Note that, used as the reference may be, for example, other than the zero-crossing point of the power supply cycle, a time point at which a phase, of an AC voltage, shifted from the zero-crossing point by a predetermined amount is present. Also, the coexistence signal may not necessarily be transmitted/received at timings of all the references. The coexistence signal may be transmitted/received intermittently with arbitrary intervals.

In the present embodiment, defined as described below are: the coexistence signal 201 which is cyclically transmitted by using, as a reference, a zero-crossing point 204 of an alternating current flowing on the power lines 130, i.e., a point at which a phase of the alternating current is 0 degrees; and a plurality of communication slots which are set by time-dividing an interval between coexistence signals 201, i.e., by time-dividing a coexistence signal cycle T209.

First, the coexistence signal cycle T209 is divided into M periods (M is an integer no less than 2) by using communication slot units 207 each comprising N communication slots (N is an integer no less than 2). Then, in each communication slot unit 207, one of the communication slots is defined as a "D-Slot" thereby enabling acquisition of a right for performing communication M/X times (X is a divisor of M) in the coexistence signal cycle T209, and a remaining N-1 communication slot is defined as an "S-Slot" thereby enabling acquisition of a right for performing communication M times in the coexistence signal cycle T209. It is preferred that the fixed number N is set to be 10 or smaller, as mentioned above in the description of the conventional technique. Also, the fixed number M is defined depending on in how much detail the occupancy rate of the medium is to be set.

FIG. 2 shows an example in which a communication slot unit 207 comprises 5 (= N) communication slots, i.e., a D-Slot and S-Slots 1 to 4, and a period in which the communication slot unit 207 is repeated 9 (= M) times is defined as the coexistence signal cycle T209.

The coexistence signal 201 defines segments for storing information about communication slots to be used by a communication system. These segments are defined so as to correspond to the number of communication slots S-Slot contained in the communication slot unit 207 and to a basic cycle by which the communication slot D-Slot is allocated (D-Slot basic cycle 208).

FIG. 2 shows an example where a total of seven segments, i.e., four segments H1 to H4, which correspond to the number of communication slots S-Slot contained in the communication slot unit 207, and three segments Ba to Bc, which correspond to D-Slot basic cycles 208, are defined as the coexistence signal 201. In other words, one D-Slot basic cycle 208 comprises 3 (= X) communication slot units 207.

Each of the communication systems 110 and 120 uses the above-defined coexistence signal 201 and the plurality of communication slots, so as to declare, in a manner described below, a communication slot which each of the communication systems desires to use exclusively. A case where bit "1"/bit "0" is used as an example of specified information for indicating use/nonuse of a communication slot, is described below in an easily understandable manner by taking the example of FIG. 2.

A communication system, which desires to exclusively use the communication slot S-Slot 1, generates the coexistence signal 201 containing a bit "1" in the segment H1, and transmits the coexistence signal 201 to the other communication system at a timing of the zero-crossing point 204. In this manner, use of the communication slot S-Slot 1 is declared. Similarly, use of the communication slots S-Slot 2 to 4 is declared by generating and transmitting the coexistence signal 201 containing a bit "1" in the segments H2 to H4. In this manner, communication band allocation can be performed, without causing the multiple communication systems to interfere with each other, in units of a communication slot S-Slot, i.e., in units of 1/5 of the communication slot unit in the example of FIG. 2 (in units of 20% of the entire communication band).

Further, a communication system, which desires to exclusively use the communication slot D-Slot, generates the coexistence signal 201 containing a bit "1" in a part of or all the segments Ba to Bc, and transmits the coexistence signal 201 to the other communication system at a timing of the zero-crossing point 204. Here, the coexistence signal 201 containing a bit "1" in the segment Ba is used to declare exclusive use of a first communication slot D-Slot of each D-Slot basic cycle 208; the coexistence signal 201 containing a bit "1" in the segment Bb is used to declare exclusive use of a second communication slot D-Slot of each D-Slot basic cycle 208; and the coexistence signal 201 containing a bit "1" in the segment Bc is used to declare exclusive use of a third communication slot D-Slot of each D-Slot basic cycle 208.

As a result of performing allocation of 1/3 of the communication slots D-Slot by setting a bit "1" for any one of the segments Ba to Bc, communication band allocation can be performed in units of 1/3 of 1/5 of the communication slot unit, i.e., in units of 1/15 of the communication slot unit (in units of 6. 67% of the entire communication band). Similarly, as a result of performing allocation of 2/3 of the communication slots D-Slot by setting a bit "1" for any two of the segments Ba to Bc, communication band allocation can be performed in units of 2/3 of 1/5 of the communication slot unit, i.e., in units of 2/15 of the communication slot unit (in units of 13.3% of the entire communication band). Note that, setting a bit "1" for all the segments Ba to Bc means that the communication slots D-Slot in the entire period are exclusively used, i.e., the communication slots D-Slot are simply used as communication slots S-Slot.

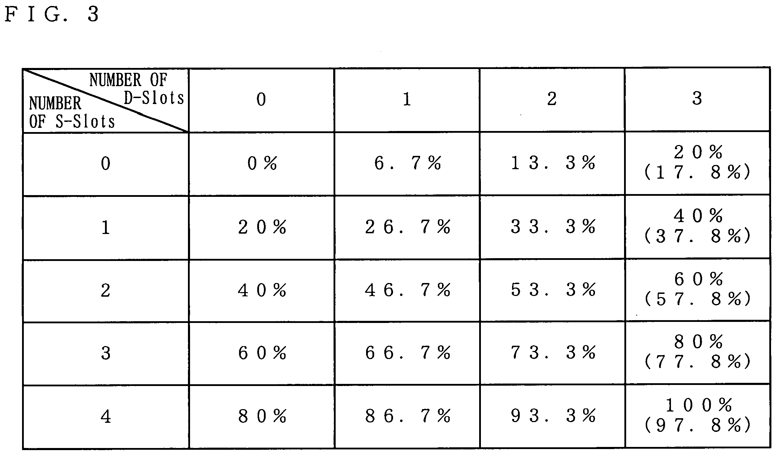

FIG. 3 shows an occupancy rate, in a case based on the definition shown in FIG. 2, of the medium in relation to the number of communication slots secured by a communication system.

It is understood from FIG. 3 that an effect, in which the occupancy rate can be changed in detail without deteriorating communication efficiency, is obtained by defining use of the communication slot D-Slot by time division without changing the communication slot unit 207. For example, a best-effort type communication system is flexibly accommodated, e.g., when it is unnecessary to occupy communication slots S-Slot since the amount of data to be transmitted is small, communication is performed by only using communication slots D-Slot. Since the coexistence signal 201 is transmitted/received by the coexistence signal cycle T209, each communication system can dynamically change, for each coexistence signal cycle T209, communication slots to occupy. Further, since the allocation of the communication slot D-Slot can be indicated by simple information, e.g., 1 bit, a waste of communication resources by the coexistence signal 201 can be reduced.

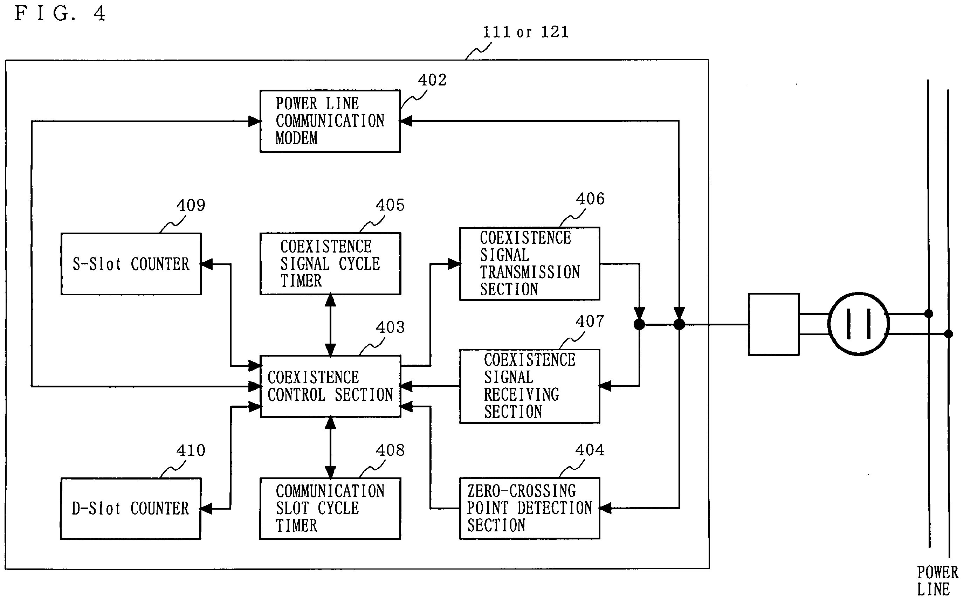

Next, a configuration of the master stations 111 and 121 will be described. FIG. 4 shows in detail an exemplary configuration of the master stations 111 and 121.

The master stations 111 and 121 each comprise a power line communication modem 402, a coexistence control section 403, a zero-crossing point detection section 404, a coexistence signal cycle timer 405, a coexistence signal transmission section 406, a coexistence signal receiving section 407, a communication slot cycle timer 408, an S-Slot counter 409 and a D-Slot counter 410.

The power line communication modem 402 performs a series of operations for data communication. The coexistence control section 403 performs a series of operations for coexistence of power line communication modems of different schemes. The zero-crossing point detection section 404 detects the zero-crossing point of the alternate current flowing on the power line. The coexistence signal cycle timer 405 starts operating at the time of start-up, and measures a time for the coexistence signal cycle T209. The coexistence signal transmission section 406 generates the coexistence signal 201 in accordance with coexistence signal information provided from the coexistence control section 403, and transmits the coexistence signal on the power line. In accordance with a reception start instruction from the coexistence control section 403, the coexistence signal receiving section 407 detects the coexistence signal 201 flowing on the power line, analyses the detected coexistence signal, and notifies the coexistence control section 403 of information about use/nonuse of each communication slot. The communication slot cycle timer 408 starts operating at the time of start-up, and measures a time for one of the communication slots. The S-Slot counter 409 counts the numbers of the communication slots S-Slot. The D-Slot counter 410 counts the order of the communication slots D-Slot in the D-Slot basic cycle 208.

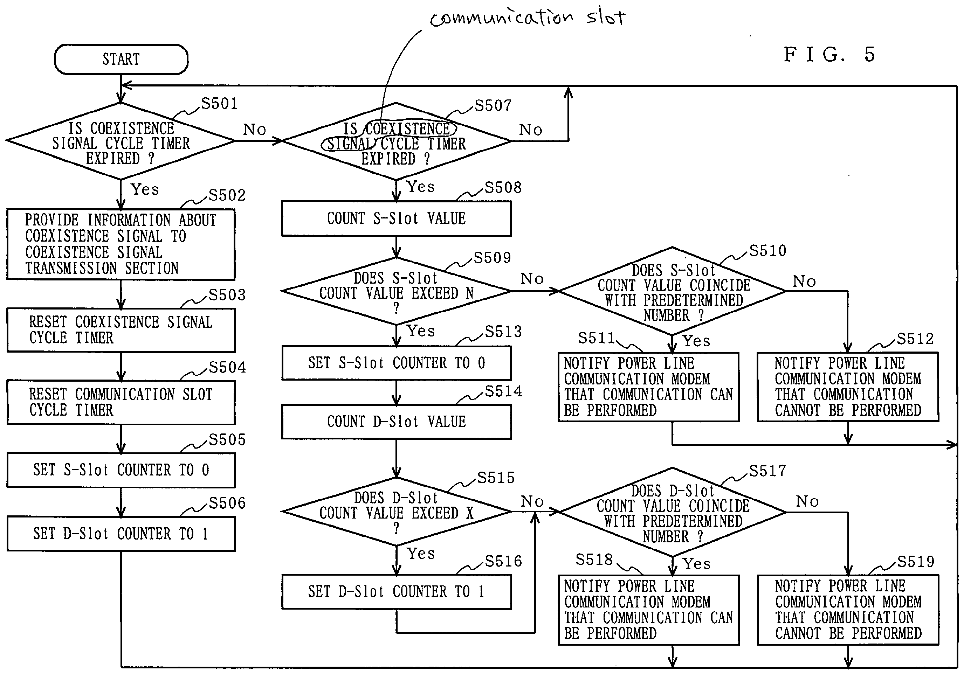

Next, operations of the master stations 111 and 121 will be described in detail. FIG. 5 is a flowchart showing operations of the master stations 111 and 121 in a steady state.

Immediately after the start-up, based on communication slot request information provided from the power line communication modem 402 and information about the coexistence signal 201 which is transmitted by another communication system and received by the coexistence signal receiving section 407, the coexistence control section 403 determines a communication slot which the communication system, to which the coexistence control section 403 belongs, is to use. At the timing of the zero-crossing point of the alternating current, which zero-crossing point is notified by the zero-crossing point detection section 404, the coexistence control section 403 sends, to the coexistence signal transmission section 406, the coexistence signal information for declaring exclusive use of the determined communication slot, and instructs the coexistence signal transmission section 406 to generate and transmit the coexistence signal 201 to the power line. In this manner, the communication system enters a steady state where the communication slot is secured and data communication can be started.

The coexistence control section 403 of the communication system, which has entered the steady state, determines an expiration time point of the coexistence signal cycle timer 405 (step S501). At a point when the coexistence signal cycle timer 405 has expired, the coexistence control section 403 provides the coexistence signal information to the coexistence signal transmission section 406, and causes the coexistence signal transmission section 406 to transmit the coexistence signal 201 (step S502). Also, the coexistence control section 403 resets the coexistence signal cycle timer 405 and the communication slot cycle timer 408 (steps S503 and S504). Further, the coexistence control section 403 resets the S-Slot counter 409 and the D-Slot counter 410, and sets the D-Slot counter 410 to "1".

On the other hand, when the coexistence signal cycle timer 405 has not expired yet, the coexistence control section 403 determines an expiration time point of the communication slot cycle timer 408 (step S507). At a point when the communication slot cycle timer 408 has expired, the coexistence control section 403 counts up the S-Slot counter 409 (step S508). Next, the coexistence control section 403 determines whether or not a count value of the S-Slot counter 409 exceeds the number N of the communication slots contained in the communication slot unit 207 (step S509). In the case where the number N of the communication slots is not exceeded, when the count value of the S-Slot counter 409 coincides with a predetermined number which corresponds to the secured communication slot, the coexistence control section 403 notifies the power line communication modem 402 that communication can be performed, and when the count value does not coincide with the predetermined number, the coexistence control section 403 notifies the power line communication modem 402 that communication cannot be performed, and then returns to the determining at step S501 (steps S510 to S512).

On the other hand, when it is determined at step S509 that the number N of the communication slots is exceeded, the coexistence control section 403 sets the S-Slot counter 409 to "0", and counts up the D-Slot counter 410 (steps S513 and S514). Here, the coexistence control section 403 determines whether or not the D-Slot counter 410 exceeds the number X of the communication slot units 207 contained in the D-Slot basic cycle 208 (step S515) . In the case where the D-Slot counter 410 does not exceed the number X of the communication slot units 207, when a count value of the D-Slot counter 410 coincides with a predetermined number which corresponds to the secured communication slot, the coexistence control section 403 notifies the power line communication modem 402 that communication can be performed, and when the count value does not coincide with the predetermined number, the coexistence control section 403 notifies the power line communication modem 402 that communication cannot be performed, and then returns to the determining at step S501 (steps S517 to S519). Note that, when it is determined at step S515 that the number X of the communication slot units 207 is exceeded, the coexistence control section 403 performs processes at steps S517 to S519 after resetting the D-Slot counter 410 to "1".

As described above, the communication device according to the embodiment of the present invention performs coexistence control using TDM in which two different types of communication slots, i.e., S-Slot and D-Slot which are different in allocation cycle, are used. This allows: a plurality communication systems of different communication schemes to coexist on a same communication medium; a simple configuration to satisfy QoS requirements; and an occupancy rate of the medium to be set in detail.

Note that, in the description of the above embodiment, the communication slot unit 207, which comprises the four communication slots S-Slot and one communication slot D-Slot, and the coexistence signal 201, which comprises seven segments H1 to H4 and Ba to Bc, are merely examples, and can be arbitrarily set in accordance with desired communication quality, communication efficiency or the like.

Further, the coexistence signal 201 may be transmitted using the communication slot D-Slot of the first communication slot unit 207 of the coexistence signal cycle T209. In this case, the medium is occupied by the coexistence signal by 2.2% which is equivalent to one communication slot D-Slot. Accordingly, in the case where all the communication slots D-Slot are used, a value of the occupancy rate of the medium to be used for data communication is as shown in brackets of FIG. 3. However, this causes little effect since, in practical use, the number of communication slot units 207 set in the coexistence signal cycle T209 is 20 or more.

Still further, a plurality of communication systems, to which the coexistence control of the present invention is applicable, may not necessarily be a plurality of communication systems of different data communication schemes which are constructed in a same home. For example, the communication systems may be one communication system at one house and the other communication system at an adj acent house, the other communication system using a same data communication scheme as and interfering with said one communication system.

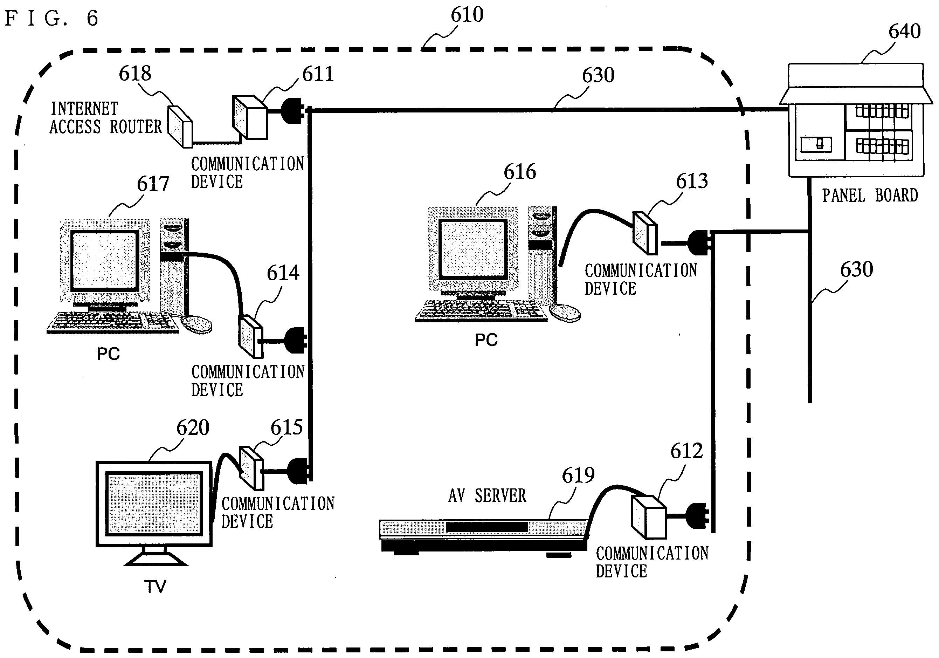

Note that the number of the plurality of communication systems is not limited to 2 as shown in FIG. 1, but may be three or more. Further, as shown in FIG. 6, the present invention is applicable to a single communication system comprising a plurality of communication devices which use a communication medium in common in a time-division manner.

In FIG. 6, a single communication system 610 is defined. The communication system 610 uses power lines 630 wired at home, and comprises five communication devices 611 to 615.

In the communication system 610, as a result of the communication devices 611 to 615 performing operations in the same manner as that of the master stations 111 and 121 described in the above embodiment, communications performed by the devices do not interfere with each other, and QoS requirements are satisfied by a simple configuration, and an occupancy rate of the medium can be set in detail.

The above-described embodiment may be realized by causing a CPU to execute a program stored in a storage device (ROM, RAM, hard disk or the like), which program allows the CPU to perform the above-described process steps. In this case, the program may be executed after being stored in the storage device via a storage medium, or the program may be directly executed on the storage medium. Here, the storage medium may be, for example: a semiconductor memory such as a ROM, RAM, flash memory or the like; a magnetic disk memory such as a flexible disc, hard disk or the like; an optical disc such as a CD-ROM, DVD, BD or the like; and a memory card. Here, referred to as a storage medium may also be a communication medium such as a telephone line or transmission path.

In the above-described embodiment of the present invention, function blocks of the master stations 111 and 121, which include the coexistence control section 403, the coexistence signal cycle timer 405, the coexistence signal transmission section 406, the coexistence signal receiving section 407, the communication slot cycle timer 408, the S-Slot counter 409 and the D-Slot counter 410 shown in FIG. 4, are typically realized as LSIs which are integrated circuits. These function blocks each may be realized as an individual chip, or a chip which partly or entirely includes these function blocks may be provided. Alternatively, components, which are involved in communication performed within a system to which the components belong, may be provided as an individual LSI chip, and also components, which are involved in coexistence signal transmission/reception, may be provided as an individual LSI chip. Although these chips are referred to here as LSIs, these chips may be ICs, system LSIs, super LSIs or ultra LSIs, depending on an integration density thereof.

A method for circuit integration is not limited to LSI. The circuit integration may be realized using a dedicated circuit or a general-purpose processor. Further, an FPGA (Field Programmable Gate Array), which can be programmed after LSI production, or a reconfigurable processor, which enables connections or settings of circuit cells in LSI to be reconfigured, may be used.

Further, if a new circuit integration technology to be replaced with the LSI technology is developed as a result of an advance in the semiconductor technology, or is developed based on a technology derived from the semiconductor technology, the function blocks may, of course, be integrated using such a technology. There may be a possibility of application of biotechnology or the like.

A communication system incorporating the present invention may be in the form of an adaptor which converts a signal interface, such as an Ethernet (registered trademark) interface, IEEE1394 interface, USB interface or the like, into an interface for power line communication. This enables the communication system to be connected to multimedia apparatuses, such as a personal computer, DVD recorder, digital television, home server system and the like, which have various types of interfaces. This allows a network system, which is able to transmit, with a high speed, digital data such as multimedia data or the like by using a power line as a medium, to be constructed. As a result, unlike a conventional wired LAN, there is no necessity to newly place a network cable, and a power line already provided in homes, offices or the like can be used as a network line. Therefore, the present invention is considerably useful in terms of cost and ease of installation.

If, in the future, functions including the present invention are incorporated into multimedia apparatuses such as a personal computer, DVD recorder, digital television, home server system and the like, data transfer to be performed between the multimedia apparatuses via power codes thereof will be enabled. In this case, an adaptor, Ethernet (registered trademark) cable, IEEE1394 cable, USB cable and the like are no longer necessary, and thus wiring is simplified. Further, these apparatuses can be connected to the Internet via a rooter. Also, these apparatuses can be connected to a wireless LAN or a conventional wired LAN via a hub or the like. Therefore, there is no problem in extending a LAN system in which the high-speed power line transmission system of the present invention is used.

In a power line transmission scheme, communication data is transferred via a power line. For this reason, unlike a wireless LAN, a power line transmission scheme does not have a problem in that a radio wave is intercepted whereby data leakage is caused. Therefore, a power line transmission scheme is effective for data protection in terms of security. Of course, data transferred on a power line is protected by, for example, an IP protocol IPSec, content encryption, or other DRM schemes.

Thus, high-quality AV content transmission using a power line is achieved by having QoS functions which include a copyright protection function using content encryption and effects of the present invention (throughput enhancement and band allocation which flexibly responds to an increase in retransmission or a traffic change).

### INDUSTRIAL APPLICABILITY

The present invention is applicable to a case, e.g., where a plurality of communication systems, which cannot be interconnected, each perform communication on a same communication medium without being interfered with by another communication system. The present invention is particularly useful for a modem which uses a power line as a communication medium or which uses a wireless communication medium, and useful for various electronic apparatuses and the like which have such communication functions.

## Claims

1. A communication device (611-615) which coexists with another communication device on a same communication medium by time division communication, the communication device comprising:
a coexistence control section (403) for dividing, using communication slot units (207) each comprising N communication slots (N is an integer no less than 2), a cycle T (209) into M periods (M is an integer no less than 2), and for defining at least one of the communication slots in each communications slot unit (207) as a first communication slot (D-Slot) thereby enabling acquisition of a right for performing communication M/X times (X is a divisor of M) in the cycle T (209), and for defining, in each communication slot unit (207), a communication slot other than the first communication slot (D-Slot) as a second communication slot (S-Slot) thereby enabling acquisition of a right for performing communication M times in the cycle T (209), and for performing, in units of 1/X for the first communication slot (D-Slot) and in units of 1 for the second communication slot (S-Slot), allocation of a communication slot to exclusively use; and
a coexistence signal transmission section (406) for transmitting, to said another communication device, a coexistence signal (201) indicating the communication slot to exclusively use, which communication slot has been allocated by the coexistence control section (403).

2. The communication device to be used in each of the plurality of communication systems, according to claim 1, wherein
the coexistence signal (201) comprises X segments (Ba-Bc) corresponding to the units of 1/X of the first communication slot (D-Slot) and N segments (H1-H4) corresponding to the units of 1 of the second communication slot (S-Slot), and
exclusive use of the communication slot allocated by the coexistence control section (403) is declared by storing predetermined information in a segment among the multiple segments (H1-H4, Ba-Bc) of the coexistence signal (201), the segment corresponding to the communication slot which is desired to be exclusively used.

3. The communication device to be used in each of the plurality of communication systems, according to claim 1, wherein a number of first communication slots (D-Slot) is set to 1, and a number of second communication slots (S-Slot) is set to N-1.

4. The communications device to be used in each of the plurality of communication systems, according to claim 1, wherein
the communication medium is a power line (130), and
a reference for a start of the cycle T (209) is set to a zero-crossing point (204) of an alternating current flowing on the power line (130).

5. A method to be executed by a communication device which coexists with another communication device on a same communication medium by time division communication, the method comprising:
a step of dividing, using communication slot units (207) each comprising N communication slots (N is an integer no less than 2), a cycle T (209) into M periods (M is an integer no less than 2), and defining at least one of the communication slots in each communication slot unit (207) as a first communication slot (D-Slot) thereby enabling acquisition of a right for performing communication M/X times (X is a divisor of M) in the cycle T (209), and defining, in each communication slot unit (207), a communication slot other than the first communication slot (D-Slot) as a second communication slot (S-Slot) thereby enabling acquisition of a right for performing communication M times in the cycle T (209);
a step of allocating a communication slot, in units of 1/X for the first communication slot (D-Slot) and in units of 1 for the second communication slot (S-Slot), such that the communication slot is to be exclusively used by a communication system to which the communication device belongs; and
a step of transmitting, to another communication system, a coexistence signal (201) indicating the allocated communication slot which the Communication system is to exclusively use.

6. An integrated circuit that integrates circuits which act as
the coexistence control section (403)
and the coexistence signal transmission section (406) included in the communications device according to claim 1.

7. A communications system which uses the communication device according to claim 1, the communication device coexisting with another communication device on a same communication medium by time division communication.

## Patentansprüche

1. Kommunikationseinrichtung (611-615) in Koexistenz, durch Zeitteilungskommunikation, mit einer anderen Kommunikationseinrichtung auf einem gleichen Kommunikationsmedium, wobei die Kommunikationseinrichtung Folgendes aufweist:
einen Koexistenz-Steuerabschnitt (403) zur Teilung unter Verwendung von Kommunikationsschlitzeinheiten (207), die jeweils N Kommunikationsschlitze (N ist eine ganze Zahl nicht weniger als 2) aufweisen, eines Zyklus T (209) in M Perioden (M ist eine ganze Zahl nicht kleiner als 2) und zur Definition von mindestens einem der Kommunikationsschlitze in jeder Kommunikationsschlitzeinheit (207) als einen ersten Kommunikationsschlitz (D-Schlitz), und dadurch Ermöglichen des Erwerbs eines Rechts zur Durchführung von Kommunikation M/X Mal (X ist ein Teiler von M) in dem Zyklus T (209), und zur Definition, in jeder Kommunikationsschlitzeinheit (201), eines Kommunikationsschlitzes, der anders ist als der erste Kommunikationsschlitz (D-Schlitz), als einen zweiten Kommunikationsschlitz (S-Schlitz), und dadurch Ermöglichen des Erwerbs eines Rechts zur Durchführung von Kommunikation M Mal in dem Zyklus T (209), und zur Durchführung, in Einheiten von 1/X für den ersten Kommunikationsschlitz (D-Schlitz) und in Einheiten von 1 für den zweiten Kommunikationsschlitz (S-Schlitz), der Zuweisung eines Kommunikationsschlitzes zur exklusiven Verwendung; und
einen Koexistenzsignal-Übertragungsabschnitt (406) zur Übertragung, an die andere Kommunikationseinrichtung, eines Koexistenzsignals (201), das den Kommunikationsschlitz zur exklusiven Verwendung angibt, wobei der Kommunikationsschlitz durch den Koexistenzsteuerabschnitt (403) zugewiesen wurde.

2. Kommunikationseinrichtung zur Verwendung in jedem der Vielzahl von Kommunikationssystemen nach Anspruch 1,
wobei das Koexistenzsignal (201) X Abschnitte (Ba-Bc), entsprechend den Einheiten von 1/X des ersten Kommunikationsschlitzes (D-Schlitz), und N Abschnitte (H1-H4), entsprechend den Einheiten von 1 des zweiten Kommunikationsschlitzes (S-Schlitz) aufweist, und
die exklusive Verwendung des durch den Koexistenzsteuerabschnitt (403) zugewiesenen Kommunikationsschlitzes durch Speichern von vorbestimmten Informationen in einem Abschnitt unter den mehreren Abschnitten (H1-H4, Ba-Bc) des Koexistenzsignals (201) festgelegt wird, wobei der Abschnitt dem Kommunikationsschlitz entspricht, der exklusiv zu verwenden ist.

3. Kommunikationseinrichtung zur Verwendung in jedem der Vielzahl von Kommunikationssystemen nach Anspruch 1, wobei eine Anzahl von ersten Kommunikationsschlitzen (D-Schlitz) auf 1 eingestellt ist, und eine Anzahl von zweiten Kommunikationsschlitzen (S-Schlitz) auf N-1 eingestellt ist.

4. Kommunikationseinrichtung zur Verwendung in jedem der Vielzahl von Kommunikationssystemen, nach Anspruch 1, wobei
das Kommunikationsmedium eine Stromleitung (130) ist, und
eine Referenz für einen Start des Zyklus T (209) auf einen Null-Schnittpunkt (204) eines durch die Stromleitung (130) fließenden Wechselstroms eingestellt ist.

5. Verfahren zur Durchführung durch eine Kommunikationseinrichtung, die mit einer anderen Kommunikationseinrichtung auf einem gleichen Kommunikationsmedium durch Zeitteilungskommunikation koexistiert, wobei das Verfahren umfasst:
einen Schritt der Teilung unter Verwendung von Kommunikationsschlitzeinheiten (207), die jeweils N Kommunikationsschlitze (N ist eine ganze Zahl nicht weniger als 2) aufweisen, eines Zyklus T (209) in M Perioden (M ist eine ganze Zahl nicht weniger als 2), und der Definition von mindestens einem der Kommunikationsschlitze in jeder Kommunikationsschlitzeinheit (207) als einen ersten Kommunikationsschlitz (D-Schlitz), und dadurch Ermöglichen des Erwerbs eines Rechts zur Durchführung von Kommunikation M/X Mal (X ist ein Teiler von M) in dem Zyklus T (209), und der Definition in jeder Kommunikationsschlitzeinheit (207) eines Kommunikationsschlitzes, der anders ist als der erste Kommunikationsschlitz (D-Schlitz), als ein zweiter Kommunikationsschlitz (S-Schlitz), und dadurch Ermöglichen des Erwerbs eines Rechts zur Durchführung von Kommunikation M Mal in dem Zyklus T (209);
einen Schritt der Zuweisung eines Kommunikationsschlitzes, in Einheiten von 1/X für den ersten Kommunikationsschlitz (D-Schlitz) und in Einheiten von 1 für den zweiten Kommunikationsschlitz (S-Schlitz), derart, dass der Kommunikationsschlitz durch ein Kommunikationssystem, zu dem die Kommunikationseinrichtung gehört, exklusiv zu verwenden ist; und
einen Schritt der Übertragung, an ein anderes Kommunikationssystem, eines Koexistenzsignals (201), das den zugewiesenen Kommunikationsschlitz angibt, wobei das Kommunikationssystem zur exklusiven Verwendung ist.

6. Integrierter Schaltkreis, der Schaltkreise integriert, die wirken als
der Koexistenzsteuerabschnitt (403)
und der Koexistenzsignal-Übertragungsabschnitt (406), die in der Kommunikationseinrichtung nach Anspruch 1 enthalten sind.

7. Kommunikationssystem, das die Kommunikationseinrichtung nach Anspruch 1 verwendet, wobei die Kommunikationseinrichtung mit einer anderen Kommunikationseinrichtung auf dem gleichen Kommunikationsmedium durch Zeitteilungskommunikation koexistiert.

## Revendications

1. Dispositif de communication (611-615) qui coexiste avec un autre dispositif de communication sur un même support de communication par communication à répartition dans le temps, le dispositif de communication comprenant :
une section de commande de coexistence (403) pour diviser, en utilisant des unités de créneau de communication (207) comprenant chacune N créneaux de communication (N est un entier non inférieur à 2), un cycle T (209) en M périodes (M est un entier non inférieur à 2), et pour définir au moins un des créneaux de communication dans chaque unité de créneau de communication (207) comme un premier créneau de communication (D-slot) permettant ainsi l'acquisition d'un droit pour effectuer une communication M/X fois (X est un diviseur de M) dans le cycle T (209), et pour définir, dans chaque unité de créneau de communication (207), un créneau de communication autre que le premier créneau de communication (D-Slot) comme un second créneau de communication (S-Slot) permettant ainsi l'acquisition d'un droit pour effectuer une communication M fois dans le cycle T (209), et pour effectuer, en unités de 1/X pour le premier créneau de communication (D-Slot) et en unités de 1 pour le second créneau de communication (S-Slot), l'allocation d'un créneau de communication à utiliser exclusivement ; et
une section de transmission de signal de coexistence (406) pour transmettre, audit un autre dispositif de communication, un signal de coexistence (201) indiquant le créneau de communication à utiliser exclusivement, lequel créneau de communication a été alloué par la section de commande de coexistence (403).

2. Dispositif de communication destiné à être utilisé dans chacun de la pluralité des systèmes de communication, selon la revendication 1, dans lequel
le signal de coexistence (201) comprend X segments (Ba-Bc) correspondant aux unités de 1/X du premier créneau de communication (D-Slot) et N segments (H1-H4) correspondant aux unités de 1 du second créneau de communication (S-Slot), et
l'utilisation exclusive du créneau de communication alloué par la section de commande de coexistence (403) est déclarée en stockant des informations prédéterminées dans un segment parmi les multiples segments (H1-H4, Ba-Bc) du signal de coexistence (201), le segment correspondant au créneau de communication qui est souhaité être exclusivement utilisé.

3. Dispositif de communication destiné à être utilisé dans chacun de la pluralité des systèmes de communication, selon la revendication 1, dans lequel un nombre de premiers créneaux de communication (D-Slot) est établi à 1, et un nombre de seconds créneaux de communication (S-Slot) est établi à N-1.

4. Dispositif de communication destiné à être utilisé dans chacun de la pluralité des systèmes de communication, selon la revendication 1, dans lequel
le support de communication est une ligne d'alimentation (130), et
une référence pour un début du cycle T (209) est établie à un point de passage par zéro (204) d'un courant alternatif circulant sur la ligne d'alimentation (130).

5. Procédé destiné à être exécuté par un dispositif de communication qui coexiste avec un autre dispositif de communication sur un même support de communication par communication à répartition dans le temps, le procédé comprenant :
une étape de division, en utilisant des unités de créneau de communication (207) comprenant chacune N créneaux de communication (N est un entier non inférieur à 2), un cycle T (209) en M périodes (M est un entier non inférieur à 2), et de définition d'au moins un des créneaux de communication dans chaque unité de créneau de communication (207) comme un premier créneau de communication (D-Slot) permettant ainsi l'acquisition d'un droit pour effectuer une communication M/X fois (X est un diviseur de M) dans le cycle T (209), et de définition, dans chaque unité de créneau de communication (207), d'un créneau de communication autre que le premier créneau de communication (D-Slot) comme un second créneau de communication (S-Slot) permettant ainsi l'acquisition d'un droit pour effectuer une communication M fois dans le cycle T (209) ;
une étape d'allocation d'un créneau de communication, en unités de 1/X pour le premier créneau de communication (D-Slot) et en unités de 1 pour le second créneau de communication (S-Slot), de sorte que le créneau de communication doive être utilisé exclusivement par un système de communication auquel le dispositif de communication appartient ; et
une étape de transmission, à un autre système de communication, d'un signal de coexistence (201) indiquant le créneau de communication alloué que le système de communication doit exclusivement utiliser.

6. Circuit intégré qui intègre des circuits qui jouent le rôle de
la section de commande de coexistence (403) et la section de transmission de signal de coexistence (406) comprise dans le dispositif de communication selon la revendication 1.

7. Système de communication qui utilise le dispositif de communication selon la revendication 1, le dispositif de communication coexistant avec un autre dispositif de communication sur un même support de communication par communication à répartition dans le temps.
